(19) Europäisches Patentamt
European Patent Office
Office européen des brevets

(11) **EP 2 438 028 B1**

(12) **FASCICULE DE BREVET EUROPEEN**

(45) Date de publication et mention
de la délivrance du brevet:
**01.05.2013   Bulletin 2013/18**

(21) Numéro de dépôt: **10728314.5**

(22) Date de dépôt: **01.06.2010**

(51) Int Cl.:
*C04B 35/05* [(2006.01)]    *F23M 5/00* [(2006.01)]
*C04B 35/107* [(2006.01)]    *C04B 35/484* [(2006.01)]
*F23M 5/04* [(2006.01)]

(86) Numéro de dépôt international:
**PCT/IB2010/052446**

(87) Numéro de publication internationale:
**WO 2010/140120 (09.12.2010 Gazette 2010/49)**

(54) **PRODUIT ALUMINE-MAGNESIE POUR GAZEIFICATEUR**

PRODUKT AUF DER BASIS VON ALUMINA-MAGNESIA FÜR VERGASUNGSAPPARAT

PRODUCT ON THE BASIS OF ALUMINA-MAGNESIA FOR GASIFIER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **02.06.2009   FR 0953624**

(43) Date de publication de la demande:
**11.04.2012   Bulletin 2012/15**

(73) Titulaire: **Saint-Gobain Centre De Recherches Et D'etudes Europeen
92400 Courbevoie (FR)**

(72) Inventeurs:
• **JORGE, Eric
F-84210 Les Valayans (FR)**
• **BOURDONNAIS, Sébastien
F-84000 Avignon (FR)**

(74) Mandataire: **Sartorius, Jérome
Cabinet Nony
3, rue de Penthièvre
75008 Paris (FR)**

(56) Documents cités:
• **Gerald Routschka, Hartmut Wuthnow: "Pocket Manual, Refractory Materials, 3rd Edition" 14 mai 2008 (2008-05-14), VULKAN VERLAG GmbH , ESSEN (De) , XP002561499 ISBN: 9783802731587 , pages 206-209 Table 4.42 - fused spinels**
• **A.I.AINZENBERG: "Determination of the Content of Metallic Copper and its Free Oxides In a Chemical Phase Analysis of High-Alumina Refractory after Service" REFR. AND IND. CERAMICS, vol. 10, no. 1-2, 1 janvier 1969 (1969-01-01), pages 120-123, XP002561500**
• **V. PETKOV, ET. AL: "magnesia-chromite and chrome-free refractory bricks by copprt and anode slagsChemical Corrosion mechanisms o" JOURNAL OF THE EUROPEAN CERAMIC SOCIETY 27(2007), 1 janvier 2007 (2007-01-01), pages 2433-2444, XP002561501**
• **WANG R-Y ET AL: "CODEBOOK ORGANIZATION TO ENHANCE MAXIMUM A POSTERIORI DETECTION OF PROGRESSIVE TRANSMISSION OF VECTOR QUANTIZED IMAGES OVER NOISY CHANNELS" PLENARY, SPECIAL, AUDIO, UNDERWATER ACOUSTICS, VLSI, NEURAL NETWORKS. MINNEAPOLIS, APR. 27 - 30, 1993; [PROCEEDINGS OF THE INTERNATIONAL CONFERENCE ON ACOUSTICS, SPEECH, AND SIGNAL PROCESSING (ICASSP)], NEW YORK, IEEE, US, vol. 5 OF 05, 27 avril 1993 (1993-04-27), pages V-233, XP000437659 ISBN: 978-0-7803-0946-3**

## Description

### Domaine technique

L'invention concerne un produit réfractaire fondu et coulé comportant plus de 50% en masse d'alumine $Al_2O_3$ et 28% à 50% en masse de magnésie MgO.

### Etat de la technique

Parmi les produits réfractaires, on distingue classiquement les produits fondus et coulés et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fritté n'est donc pas a *priori* utilisable telle quelle pour fabriquer un produit fondu et coulé, et réciproquement.

Les produits fondus et coulés, souvent appelés "électrofondus", sont obtenus par fusion d'un mélange de matières premières appropriées dans un four à arc électrique ou par toute autre technique adaptée à ces produits. La matière en fusion est ensuite coulée dans un moule, puis le produit obtenu subit un cycle de refroidissement contrôlé pour être amené à température ambiante sans fracturation. Cette opération est appelée « recuisson » par l'homme de l'art. Le refroidissement peut également être libre, en fonction de la technologie de moulage utilisé.

Le produit fondu et coulé Monofrax® L produit et commercialisé par RHI Monofrax LTD présente une composition chimique comprenant 53,6% d'$Al_2O_3$, 44,9% de MgO, 0,44% de silice $SiO_2$, 0,23% d'oxyde de sodium $Na_2O$ et moins de 0,35% en masse de CaO.

La gazéification du charbon est un procédé connu depuis environ une cinquantaine d'années qui connaît actuellement un fort développement. Il permet en effet la production d'une part de gaz de synthèse (CO, $H_2$), sources d'énergie propre, et d'autre part de composés de base pour l'industrie chimique à partir de matières hydrocarbonées très diverses, par exemple de charbon, de coke de pétrole, voire d'huiles lourdes à recycler. Ce procédé permet en outre d'éliminer les composants indésirables, par exemple les NOx, le soufre ou le mercure, avant tout rejet dans l'atmosphère.

Le principe de la gazéification consiste en une combustion partielle contrôlée, sous vapeur d'eau et/ou d'oxygène, à une température comprise entre 1150°C et 1600°C environ et sous pression.

Il existe différents types de gazéificateurs, à lit fixe, fluidisé ou entraîné. Ces gazéificateurs diffèrent par le mode d'introduction des réactifs, la manière dont est effectué le mélange comburant-combustible, les conditions de température et de pression et le procédé d'évacuation des cendres ou du laitier, résidu liquide issu de la réaction.

L'article intitulé « Refractories for Gasification » paru dans la revue « Refractories Applications and News » Volume 8, Number 4, July-August 2003, écrit par Wade Taber du département Energy Systems de la Division Saint-Gobain Industrial Ceramics, décrit la structure d'un revêtement interne d'un gazéificateur.

Les produits réfractaires d'un revêtement interne de gazéificateur subissent le cyclage thermique, la corrosion et l'érosion par le laitier ou les cendres sèches, et l'effet de points chauds où la température peut atteindre typiquement environ 1400°C. L'érosion et la corrosion peuvent notamment conduire à l'infiltration des composés du laitier ou des cendres liquéfiées dans les pores des produits réfractaires qui elle-même, sous l'effet de l'érosion et du cyclage thermique, peut provoquer un écaillage du revêtement, et finalement un arrêt du réacteur.

Par ailleurs, le développement de la gazéification des liqueurs noires issues de la fabrication de la pâte à papier nécessite de nouveaux matériaux capables de résister à l'action corrosive des composés sodés et, en particulier présentant une faible porosité pour éviter l'infiltration des produits agressifs.

Pour accroître la durée de vie des revêtements réfractaires, les chercheurs ont tenté d'augmenter son épaisseur. Cette solution présente cependant l'inconvénient d'augmenter les coûts et de diminuer le volume utile du gazéificateur, et donc son rendement.

James P. Bennett, dans l'article « Refractory liner used in slagging gasifiers » paru dans la revue Refractories Applications and News vol 9 number 5 septembre/octobre 2004 pages 20-25, explique que la durée de vie des revêtements réfractaires actuels des gazéificateurs, en particulier des systèmes refroidis par air, est très limitée malgré leur forte teneur en oxyde de chrome. Il mentionne notamment le rapport de SJ Clayton, GJ Stiegel et J.G Wimer « *Gasification Technologies, Gasification Markets and Technologies - Present and Future, an Industry Perspective* », US DOE report DOE /FE 0447 July 2002. L'utilisation des produits comportant du chrome a d'ailleurs été abandonnée pour la gazéification des liqueurs noires.

Il existe donc un besoin pour un produit réfractaire présentant des propriétés adaptées aux environnements spécifiques rencontrés à l'intérieur des gazéificateurs, et en particulier présentant une porosité suffisamment faible pour limiter l'infiltration des produits agressifs.

La présente invention vise à satisfaire ce besoin.

**Résumé de l'invention**

Plus particulièrement, l'invention concerne un produit réfractaire fondu et coulé présentant une composition chimique telle que, en pourcentages massiques sur la base des oxydes :

- $Al_2O_3$ :          complément à 100% ;
- MgO :          28% à 50% ;
- CuO          0,05% à 1,0% ;
- $B_2O_3$ : :          $\leq$ 1,0% ;
- $SiO_2$ : :          $\leq$ 0,5% ;
- $Na_2O + K_2O$ :          $\leq$ 0,3% ;
- CaO :          $\leq$ 1,0% ;
- $Fe_2O_3 + TiO_2$ :          < 0,55% ;
- autres espèces oxydes :          < 0,5%.

Comme on le verra plus loin, de manière surprenante, les inventeurs ont découvert que cette composition permet à un produit réfractaire selon l'invention de présenter une faible porosité tout en conservant une résistance élevée à la corrosion.

Un produit réfractaire selon l'invention peut encore comporter une ou plusieurs des caractéristiques optionnelles suivants :

- La teneur massique CuO est supérieure ou égale à 0,10%, voire supérieure ou égale à 0,15%, voire supérieure ou égale à 0,20%.
- La teneur massique CuO est inférieure ou égale à 0,8%, voire inférieure ou égale à 0,7%, voire inférieure ou égale à 0,6%.
- La teneur massique $B_2O_3$ est supérieure ou égale à 0,05%, voire supérieure ou égale à 0, 1 %.
- La teneur massique $B_2O_3$ est inférieure ou égale à 0,8%, voire inférieure ou égale à 0,6%, voire inférieure ou égale à 0,4%, voire inférieure ou égale à 0,3%.
- La teneur massique CuO est supérieure ou égale à 0,10% et la teneur massique $B_2O_3$ est supérieure ou égale à 0,05%, voire supérieure ou égale à 0,1%, supérieure à 0,3%, supérieure à 0,4%, supérieure à 0,5%, voire supérieure à 0,6%.
- La teneur massique d'alumine $Al_2O_3$ est inférieure ou égale à 70%, voire inférieure ou égale à 68%.
- La teneur massique $Al_2O_3$ est supérieure ou égale à 55%, voire supérieure ou égale à 60%.
- La teneur massique MgO est inférieure ou égale à 45%, voire inférieure ou égale à 40%.
- La teneur massique MgO est supérieure ou égale à 28,2%, voire supérieure ou égale à 30%, voire supérieure ou égale à 32%.
- La teneur massique CaO est inférieure ou égale à 0,8%, inférieure ou égale à 0,6%, voire inférieure ou égale à 0,4%.
- La teneur massique ($Na_2O+K_2O$) est inférieure ou égale à 0,25%, inférieure ou égale à 0,2%, voire inférieure ou égale à 0,1%.
- La teneur massique de silice $SiO_2$ est inférieure ou égale à 0,5%, voire inférieure ou égale à 0,4%, voire inférieure ou égale à 0,2%, voire inférieure ou égale à 0,15%.
- Les oxydes de fer et/ou de titane et/ou de chrome et/ou de calcium ne sont présents qu'à titre d'impuretés.
- La teneur massique en oxydes de fer et/ou de titane, $Fe_2O_3 + TiO_2$, est inférieure à 0,4%, de préférence inférieure à 0,3%, de préférence inférieure à 0,2%.
- La teneur massique d'oxyde de chrome est inférieure à 0,2%, de préférence inférieure à 0,1%.
- Les « autres espèces oxydes » ne sont constituées que par des impuretés.
- La teneur massique totale des « autres espèces oxydes » est inférieure à 0,4%, voire inférieure à 0,3%.
- Le produit se présente sous la forme d'une pièce de forme complexe ou d'un bloc de dimensions supérieures à 100 mm x 100 mm x 100 mm.
- Le produit se présente sous la forme d'un bloc de masse supérieure à 5kg.
- La porosité totale est inférieure à 7%, de préférence inférieure à 6%.
- La densité apparente est supérieure à 3,15 g/cm$^3$, de préférence encore supérieure à 3,20 g/cm$^3$, de préférence encore supérieure à 3,25 g/cm$^3$, voire supérieure à 3,30 g/cm$^3$.
- Les différents oxydes sont distribués de manière sensiblement homogène au sein du produit. En particulier, il n'y a pas d'évolution (augmentation ou diminution) systématique d'un oxyde à proximité de la surface extérieure du produit.

Un produit selon l'invention peut être fabriqué suivant un procédé comprenant les étapes successives suivantes :

a) mélange de matières premières de manière à former une charge de départ,
b) fusion de ladite charge de départ jusqu'à obtention d'une matière en fusion,
c) coulage et solidification de ladite matière en fusion, par refroidissement, de manière à obtenir un produit réfractaire,

ce procédé étant remarquable en ce que lesdites matières premières sont choisies de manière que ledit produit réfractaire soit conforme à l'invention.

De préférence, on ajoute systématiquement et méthodiquement les oxydes pour lesquels une teneur minimale est nécessaire, notamment $Al_2O_3$, MgO, CuO, et optionnellement $B_2O_3$, ou des précurseurs de ces oxydes, par exemple $AlF_3$ ou $B_4C$. De préférence, on tient compte des teneurs de ces oxydes dans les sources des autres oxydes. Le bore peut être introduit par tout précurseur, dont $B_4C$, de préférence sous une forme qui limite son envolement trop rapide lors de la fusion. $AlF_3$ est ajouté pour faciliter le démarrage de la fusion et comme source de fluor, élément favorisant l'absence de fissuration.

De préférence, à l'étape c), la température de coulée est supérieure ou égale à 2000°C.

A l'étape c) deux voies sont possibles :

- Le coulage dans un moule calé dans un coffrage à l'aide d'un isolant granulaire. Le refroidissement est alors naturel. Le procédé est dit "sans transfert".

- Le coulage dans un moule qui est ouvert très rapidement pour extraire la pièce et l'introduire dans un caisson contenant un isolant. La pièce est alors immédiatement recouverte d'isolant. Le procédé est dit "avec transfert".

Dans cette dernière technologie, le refroidissement est contrôlé, de préférence de manière à être effectué à une vitesse inférieure à 20°C par heure, de préférence à la vitesse d'environ 10°C par heure.

Le bloc peut également être constitué en un produit selon l'invention ou fabriqué suivant un procédé selon l'invention.

Un revêtement de gazéificateur en kit peut comporter un ensemble de pièces en un produit selon l'invention, les formes respectives desdites pièces étant adaptées pour, par assemblage, former ledit revêtement. En particulier le revêtement peut être conformé pour autoriser le passage d'au moins un conduit en épousant la forme extérieure dudit conduit et/ou pour présenter au moins un angle rentrant.

L'invention concerne également un gazéificateur dont un réacteur est revêtu, au moins en partie, par un revêtement réfractaire comportant un produit réfractaire selon l'invention, en particulier dans une région destinée à être en contact avec un laitier ou une liqueur corrosive.

Le revêtement réfractaire se présente de préférence sous la forme d'un assemblage de blocs.

Le réacteur peut contenir du charbon ou des liqueurs noires issues de la fabrication de pâte à papier.

Définitions

Les teneurs massiques en oxydes se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.

Une « matière en fusion » est une masse liquide qui, pour conserver sa forme, doit être contenue dans un récipient. Elle peut contenir quelques particules solides, mais en quantité insuffisante pour qu'elles puissent structurer ladite masse.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de fer, titane, vanadium et chrome sont de préférence des impuretés.

Sauf mention contraire, toutes les teneurs en oxydes dans les produits décrits et revendiqués sont des pourcentages massiques sur la base des oxydes.

**Description détaillée de l'invention**

Dans un produit fondu et coulé selon l'invention, la forte teneur en alumine avec une teneur en MgO supérieure à 28% permet d'obtenir un produit de structure cristalline comportant majoritairement du spinelle $Al_2O_3$-MgO permettant

de répondre aux exigences de haute résistance aux laitiers et liqueurs corrosives.

Les inventeurs ont constaté que la présence d'oxyde de cuivre CuO permet avantageusement d'obtenir des produits à faible porosité, pourvu que la teneur en CuO soit supérieure à 0,05%, de préférence supérieure à 0,1% en masse.

Lors d'un procédé de fabrication comportant la coulée d'un bain de matière en fusion contenant du métal (du fer ou du cuivre), il est connu que le métal a tendance à s'accumuler au fond du bain. Il contribue alors à percer la cuve contenant le bain et peut perturber le passage du courant électrique en augmentant les fuites électriques. C'est le mérite des inventeurs d'avoir été à l'encontre de cette recommandation pour découvrir l'effet positif d'un ajout de CuO.

Cependant, selon l'invention, la teneur en CuO doit être limitée à des teneurs inférieures à 1,0% car, au-delà, CuO peut nuire à la réfractarité du produit par la création d'une quantité de phases CuO-MgO et/ou CuO-$Al_2O_3$ trop importante.

Les inventeurs ont également découvert que la présence d'oxyde de bore $B_2O_3$ permet avantageusement de favoriser l'action de CuO.

La présence de bore favorise également l'élimination de la soude par migration vers la surface de tous les alcalins. Or ces alcalins sont nocifs à la résistance du produit à la formation d'alumine béta, source de gonflement et d'écaillage du produit en service.

Comme le montrent les exemples ci-dessous, la teneur massique $B_2O_3$ peut être supérieure ou égale à 0,05%, voire supérieure ou égale à 0,1%.

Cependant, la présence de $B_2O_3$ doit être limitée à des teneurs inférieures à 1,0%, voire inférieure ou égale à 0,8%, car, au-delà, $B_2O_3$ peut nuire à la réfractarité par la création d'une phase vitreuse trop importante.

La teneur en silice $SiO_2$ ne doit pas dépasser 0,5% car elle peut nuire à la résistance à la corrosion. En particulier, à une trop forte teneur, la silice pourrait se combiner avec les impuretés pour augmenter la phase vitreuse, nocive à la tenue à la corrosion, ou réagir avec l'alumine pour former de la mullite. Or la présence de mullite est préjudiciable à la résistance à la corrosion par les liqueurs noires de papèterie.

Dans un produit selon l'invention, on considère que les oxydes $Na_2O$ et $K_2O$ ont des effets similaires. Les oxydes $Na_2O$ et $K_2O$ ont un effet défavorable sur la résistance à la formation d'alumine béta, et tendent à augmenter la teneur en phase vitreuse. La teneur massique de $Na_2O+K_2O$ doit donc être inférieure ou égale à 0,3%.

La teneur massique de CaO doit également être inférieure ou égale à 1,0%, de préférence inférieure ou égale à 0,4%.

Selon l'invention, la teneur massique de $Fe_2O_3$ + $TiO_2$ est inférieure à 0,55% et, de préférence, la teneur massique de $Cr_2O_3$ est inférieure à 0,2%, de préférence inférieure à 0,10%. En effet, ces oxydes sont néfastes et leur teneur doit être de préférence limitée à des traces, de préférence introduites à titre d'impuretés avec les matières premières.

Les « autres espèces oxydes » sont les espèces qui ne sont pas listées ci-dessus, à savoir les espèces autres que $Al_2O_3$, MgO, CuO, $B_2O_3$, $SiO_2$, $Na_2O$, $K_2O$, CaO, $Fe_2O_3$ et $TiO_2$. Dans un mode de réalisation, les « autres espèces oxydes » sont limitées à des espèces dont la présence n'est pas particulièrement souhaitée et qui sont généralement présentes à titre d'impuretés dans les matières premières.

Classiquement, dans un produit fondu et coulé, les oxydes représentent plus de 98,5%, plus de 99%, voire sensiblement 100% de la masse du produit. Il en est de même dans un produit selon l'invention.

Un produit selon l'invention peut présenter une forme complexe. En particulier, il peut présenter la forme d'une brique ou d'un bloc présentant une surface non plane, par exemple une surface concave et/ou convexe, notamment une surface cylindrique, conique ou en forme de cornière. Une forme complexe permet notamment de s'adapter à l'agencement des organes d'un gazéificateur, et en particulier d'autoriser un passage de conduits.

Un produit selon l'invention peut être classiquement fabriqué suivant les étapes a) à c) décrites ci-dessous :

a) mélange de matières premières de manière à former une charge de départ,
b) fusion de ladite charge de départ jusqu'à obtention d'une matière en fusion,
c) solidification de ladite matière en fusion, par refroidissement, de manière à obtenir un produit réfractaire selon l'invention.

A l'étape a), les matières premières sont choisies de manière à garantir les teneurs en oxydes dans le produit fini.

A l'étape b), la fusion est de préférence réalisée grâce à l'action combinée d'un arc électrique assez long, ne produisant pas de réduction, et d'un brassage favorisant la réoxydation des produits. Le réglage en arc court ou moyen est aussi utilisable pour l'élaboration du produit.

Pour minimiser la formation de nodules d'aspect métallique et éviter la formation de fentes ou fendillements dans le produit final, il est préférable d'opérer la fusion dans des conditions oxydantes.

Préférentiellement on utilise le procédé de fusion à l'arc long décrit dans le brevet français n° 1 208 577 et ses additions n° 75893 et 82310.

Ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain.

La fusion peut en particulier s'opérer à une température supérieure à 2000°C, de préférence comprise entre 2050°C et 2200°C.

A l'étape c), le refroidissement est variable en fonction de la technologie de moulerie nécessaire à l'élaboration des pièces.

Un produit de l'invention ainsi fabriqué est principalement constitué de cristaux de spinelle alumine-magnésie et de périclase ; on n'observe pas de cristaux d'alumine.

**Exemples**

Les exemples non limitatifs suivants sont donnés dans le but d'illustrer l'invention.

Dans ces exemples, on a employé les matières premières suivantes :

- de l'alumine calcinée contenant principalement, en moyenne massique, 99,5% de $Al_2O_3$, 0,27% de $Na_2O$ et 100 ppm de $SiO_2$,
- de l'$AlF_3$ contenant au plus 0,15% de $SiO_2$ et au plus 0,25% de $Na_2O$,
- de la magnésie synthétique calcinée de haute pureté, contenant 98,5% MgO, au plus 0,9% de CaO, 0,2% de $SiO_2$ et au plus 0,6% de $Fe_2O_3$,
- du carbure de bore, contenant 76,25% de Bore, 20,1% de Carbone et 0,18% de $Fe_2O_3$,
- de l'oxyde de cuivre $Cu_2O$ contenant typiquement 98,7% de $Cu_2O$ et 0,7% de cuivre métallique.

Les matières premières ont été fondues selon le procédé classique de fusion en four à arc, comme décrit ci-dessus, puis la matière en fusion a été coulée pour obtenir des blocs.

L'analyse chimique des produits obtenus est donnée dans le tableau 1 ; il s'agit d'une analyse chimique globale moyenne, donnée en pourcentages massiques.

Dans le tableau 1 suivant, * indique que l'exemple est en dehors de l'invention, une case vide correspond à une teneur inférieure ou égale à 0,04% massique. Le complément à 100% est constitué par les espèces oxydes autres que celles mentionnées dans le tableau.

Classiquement, la porosité totale est mesurée à l'aide d'une balance de précision, la densité apparente au moyen d'une cuve à mercure et la densité absolue au moyen d'un pycnomètre à hélium sur poudre broyée.

La porosité totale est donnée par la relation suivante :

$$\text{Porosité totale} = 100 \times (\text{densité absolue} - \text{densité apparente}) / \text{densité absolue}$$

Tableau 1

| | 1* | 2* | 3* | 4 | 5 | 6 | 7 | 8 | 9 | 10 |
|---|---|---|---|---|---|---|---|---|---|---|
| $Al_2O_3$ | 50,3 | 68,1 | 71,4 | 62,82 | 61,85 | 62,22 | 62,55 | 61,88 | 63,24 | 64,1 |
| MgO | 48,7 | 31,1 | 27,6 | 36 | 36,82 | 36,21 | 36,21 | 35,91 | 35,2 | 34,22 |
| CuO | | | | 0,49 | 0,35 | 0,25 | 0,44 | 0,19 | 0,13 | 0,23 |
| $B_2O_3$ | | | 0,33 | 0,3 | | | | 0,5 | 0,63 | 0,68 |
| $SiO_2$ | 0,10 | 0,10 | 0,08 | 0,08 | 0,05 | 0,05 | 0,05 | 0,05 | 0,05 | 0,05 |
| $Na_2O$ | 0,20 | 0,13 | 0,11 | 0,13 | ≤0,3 | ≤0,3 | ≤0,3 | ≤0,3 | 0,09 | 0,1 |
| CaO | 0,10 | 0,22 | 0,14 | 0,05 | 0,54 | 0,57 | 0,52 | 0,5 | 0,35 | 0,27 |
| $Fe_2O_3$ | 0,27 | 0,17 | 0,11 | 0,13 | 0,21 | 0,22 | 0,21 | 0,21 | 0,18 | 0,22 |
| Porosité totale (%) | 15 | 15,3 | 10,9 | 4,5 | 5,5 | 6,2 | 6,7 | 6,5 | 3,8 | 5,7 |

(suite)

|  | 1* | 2* | 3* | 4 | 5 | 6 | 7 | 8 | 9 | 10 |
|---|---|---|---|---|---|---|---|---|---|---|
| Densité apparente (g/cm$^3$) |  |  |  | 3,43 | 3,4 | 3,38 | 3,35 | 3,35 | 3,44 | 3,38 |

Les résultats montrent que les produits de l'invention testés présentent une porosité inférieure à celle des exemples comparatifs, ce qui leur permet, notamment, de limiter l'infiltration des laitiers.

Bien entendu, la présente invention n'est pas limitée aux modes de réalisation décrits fournis à titre d'exemples illustratifs et non limitatifs.

**Revendications**

1. Produit réfractaire fondu et coulé présentant une composition chimique telle que, en pourcentages massiques sur la base des oxydes :

  - $Al_2O_3$ :     complément à 100% ;
  - MgO :    28% à 50% ;
  - CuO    0,05% à 1,0% ;
  - $B_2O_3$ :    $\leq$ 1,0% ;
  - $SiO_2$ :    $\leq$ 0,5% ;
  - $Na_2O + K_2O$ :    $\leq$ 0,3% ;
  - CaO :    $\leq$ 1,0% ;
  - $Fe_2O_3 + TiO_2$ :    < 0,55% ;
  - autres espèces oxydes :    < 0,5%.

2. Produit selon la revendication précédente, dans lequel la teneur massique CuO est supérieure ou égale à 0,10% et inférieure ou égale à 0,8%.

3. Produit selon la revendication précédente, dans lequel la teneur massique CuO est supérieure ou égale à 0,15% et inférieure ou égale à 0,7%.

4. Produit selon la revendication précédente, dans lequel la teneur massique CuO est supérieure ou égale à 0,20% et inférieure ou égale à 0,6%.

5. Produit selon l'une quelconque des revendications précédentes, dans lequel la teneur massique $B_2O_3$ est supérieure ou égale à 0,05%.

6. Produit selon la revendication précédente, dans lequel la teneur massique $B_2O_3$ est supérieure ou égale à 0,1%.

7. Produit selon l'une quelconque des revendications précédentes, dans lequel la teneur massique $B_2O_3$ est inférieure ou égale à 0,6%.

8. Produit selon la revendication précédente, dans lequel la teneur massique $B_2O_3$ est inférieure ou égale à 0,3%.

9. Produit selon l'une quelconque des revendications précédentes, dans lequel la teneur massique d'alumine $Al_2O_3$ est inférieure ou égale à 70% et supérieure ou égale à 55%.

10. Produit selon la revendication précédente, dans lequel la teneur massique d'alumine $Al_2O_3$ est inférieure ou égale à 68% et supérieure ou égale à 60%.

11. Produit selon l'une quelconque des revendications précédentes, dans lequel la teneur massique MgO est inférieure ou égale à 45% et supérieure ou égale à 28,2%.

12. Produit selon la revendication précédente, dans lequel la teneur massique MgO est inférieure ou égale à 40% et supérieure ou égale à 30%.

13. Produit selon l'une quelconque des revendications précédentes, dans lequel

      - la teneur massique CaO est inférieure ou égale à 0,6% ; et/ou
      - la teneur massique $Na_2O+K_2O$ est inférieure ou égale à 0,25% ; et/ou
      - la teneur massique de silice $SiO_2$ est inférieure ou égale à 0,15% ; et/ou
      - la teneur massique en oxydes de fer et/ou de titane, $Fe_2O_3 + TiO_2$, est inférieure à 0,4% ; et/ou
      - la teneur massique d'oxyde de chrome est inférieure à 0,1%.

14. Gazéificateur dont un réacteur est revêtu, au moins en partie, par un revêtement réfractaire comportant un produit réfractaire selon l'une quelconque des revendications précédentes.

15. Gazéificateur selon la revendication précédente, dont le réacteur contient du charbon ou des liqueurs noires issues de la fabrication de pâte à papier.


**Claims**

1. A fused-cast refractory product having a chemical composition such that, in percentages by weight on the basis of the oxides:

      - $Al_2O_3$:     balance to 100%;
      - MgO:     28% to 50%;
      - CuO:     0.05% to 1.0%;
      - $B_2O_3$:     $\leq 1.0\%$;
      - $SiO_2$:     $\leq 0.5\%$;
      - $Na_2O + K_2O$:     $\leq 0.3\%$;
      - CaO:     $\leq 1.0\%$;
      - $Fe_2O_3 + TiO_2$:     $< 0.55\%$;
      - other oxide species     $< 0.5\%$.

2. The product as claimed in the preceding claim, in which the CuO mass content is greater than or equal to 0.10% and less than or equal to 0.8%.

3. The product as claimed in the preceding claim, in which the CuO mass content is greater than or equal to 0.15% and less than or equal to 0.7%.

4. The product as claimed in the preceding claim, in which the CuO mass content is greater than or equal to 0.20% and less than or equal to 0.6%.

5. The product as claimed in any one of the preceding claims, in which the $B_2O_3$ mass content is greater than or equal to 0.05%.

6. The product as claimed in the preceding claim, in which the $B_2O_3$ mass content is greater than or equal to 0.1 %.

7. The product as claimed in any one of the preceding claims, in which the $B_2O_3$ mass content is less than or equal to 0.6%.

8. The product as claimed in the preceding claim, in which the $B_2O_3$ mass content is less than or equal to 0.3%.

9. The product as claimed in any one of the preceding claims, in which the alumina $Al_2O_3$ mass content is less than or equal to 70% and greater than or equal to 55%.

10. The product as claimed in the preceding claim, in which the alumina $Al_2O_3$ mass content is less than or equal to 68% and greater than or equal to 60%.

11. The product as claimed in any one of the preceding claims, in which the MgO mass content is less than or equal to 45% and greater than or equal to 28.2%.

**12.** The product as claimed in the preceding claim, in which the MgO mass content is less than or equal to 40% and greater than or equal to 30%.

**13.** The product as claimed in any one of the preceding claims, in which:

- the CaO mass content is less than or equal to 0.6%; and/or
- the $Na_2O+K_2O$ mass content is less than or equal to 0.25%; and/or
- the silica $SiO_2$ mass content is less than or equal to 0.15%; and/or
- the mass content of iron and/or titanium oxides, $Fe_2O_3 + TiO_2$, is less than 0.4%; and/or
- the chromium oxide mass content is less than 0.1%.

**14.** A gasifier, a reactor of which is lined, at least partly, with a refractory lining comprising a refractory product as claimed in any one of the preceding claims.

**15.** The gasifier as claimed in the preceding claim, the reactor of which contains coal or black liquor resulting from the manufacture of paper pull.

**Patentansprüche**

**1.** Feuerfestprodukt, welches geschmolzen und gegossen ist, und eine chemische Zusammensetzung in Massenprozenten auf der Basis von Oxyden derart aufweist, dass

- $Al_2O_3$:       vervollständigt zu 100%;
- MgO:     28% bis 50%;
- CuO:     0,05% bis 1,0%;
- $B_2O_3$:     $\leq$ 1,0%;
- $SiO_2$:     $\leq$ 0,5%;
- $Na_2O + K_2O$:     $\leq$ 0,3%;
- CaO:     $\leq$ 1,0%;
- $Fe_2O_3 + TiO_2$:       < 0,55%;
- andere Oxydanteile     < 0,5%.

**2.** Produkt nach dem vorhergehenden Anspruch, in welchem der Massenanteil von CuO größer oder gleich 0,10% und kleiner oder gleich 0,8% ist.

**3.** Produkt nach dem vorhergehenden Anspruch, in welchem der Massenanteil von CuO größer oder gleich 0,15% und kleiner oder gleich 0,7% ist.

**4.** Produkt nach dem vorhergehenden Anspruch, in welchem der Massenanteil von CuO größer oder gleich 0,20% und kleiner oder gleich 0,6% ist.

**5.** Produkt nach einem der vorhergehenden Ansprüche, in welchem der Massenanteil von $B_2O_3$ größer oder gleich 0,05% ist.

**6.** Produkt nach dem vorhergehenden Anspruch, in welchem der Massenanteil von $B_2O_3$ größer oder gleich 0,1% ist.

**7.** Produkt nach einem der vorhergehenden Ansprüche, in welchem der Massenanteil von $B_2O_3$ kleiner oder gleich 0,6% ist.

**8.** Produkt nach dem vorhergehenden Anspruch, in welchem der Massenanteil von $B_2O_3$ kleiner oder gleich 0,3% ist.

**9.** Produkt nach einem der vorhergehenden Ansprüche, in welchem der Massenanteil von Aluminiumoxyd $Al_2O_3$ kleiner oder gleich 70% und größer oder gleich 55% ist.

**10.** Produkt nach dem vorhergehenden Anspruch, in welchem der Massenanteil an Aluminiumoxyd $Al_2O_3$ kleiner oder

gleich 68% und größer oder gleich 60% ist.

11. Produkt nach einem der vorhergehenden Ansprüche, in welchem der Massenanteil von MgO kleiner oder gleich 45% und größer oder gleich 28,2% ist.

12. Produkt nach dem vorhergehenden Anspruch, in welchem der Massenanteil von MgO kleiner oder gleich 40% und größer oder gleich 30% ist.

13. Produkt nach einem der vorhergehenden Ansprüche, in welchem

- der Massenanteil von CaO kleiner oder gleich 0,6%; und/oder
- der Massenanteil von $Na_2O + K_2O$ kleiner oder gleich 0,25%; und/oder
- der Massenanteil an $SiO_2$ kleiner oder gleich 0,15%; und/oder
- der Massenanteil an Eisen- und/oder Titanoxyden $Fe_2O_3 + TiO_2$ kleiner als 0,4%; und/oder
- der Massenanteil an Chromoxyden kleiner als 0,1% ist.

14. Vergaser, dessen Reaktor zumindest teilweise mit einer feuerfesten Auskleidung ausgekleidet ist, welche ein Feuerfestprodukt nach einem der vorhergehenden Ansprüche aufweist.

15. Vergaser nach dem vorhergehenden Anspruch, dessen Reaktor Kohle oder Schwarzlaugen, die aus der Herstellung von Papierbrei hervorgegangen sind, enthält.

## RÉFÉRENCES CITÉES DANS LA DESCRIPTION

**Documents brevets cités dans la description**

- FR 1208577

**Littérature non-brevet citée dans la description**

- **WADE TABER.** Refractories for Gasification. *Refractories Applications and News,* Juillet 2003, vol. 8 (4

- **JAMES P. BENNETT.** Refractory liner used in slagging gasifiers. *la revue Refractories Applications and News,* Septembre 2004, vol. 9 (5), 20-25